Europäisches Patentamt

European Patent Office

Office européen des brevets

(11) Veröffentlichungsnummer: **0 284 768 B1**

# (12) EUROPÄISCHE PATENTSCHRIFT

(45) Veröffentlichungstag der Patentschrift: **05.05.93**

(21) Anmeldenummer: **88102510.0**

(22) Anmeldetag: **20.02.88**

(51) Int. Cl.⁵: **H04N 9/83**

---

(54) **Kammfilter für Videorecorder.**

---

(30) Priorität: **28.03.87 DE 3710420**

(43) Veröffentlichungstag der Anmeldung:
**05.10.88 Patentblatt 88/40**

(45) Bekanntmachung des Hinweises auf die
Patenterteilung:
**05.05.93 Patentblatt 93/18**

(84) Benannte Vertragsstaaten:
**AT DE FR GB IT**

(56) Entgegenhaltungen:
**EP−A− 0 140 716**
**DE−C− 3 512 546**

**PATENT ABSTRACTS OF JAPAN, Band 7, Nr.
174 (E−190)[1319], 2. August 1983; & JP−
A−58 79 395 (TOKYO SHIBAURA DENKI K.K.)
13−05−1983**

(73) Patentinhaber: **GRUNDIG E.M.V. Elektro−
Mechanische Versuchsanstalt Max Grundig
holländ. Stiftung & Co. KG.
Kurgartenstrasse 37
W−8510 Fürth/Bay.(DE)**

(72) Erfinder: **Grothaus, Ulrich, Dipl.−Ing (FH)
GRUNDIG E.M.V.
Stiftung & Co KG Kurgartenstrassee 37
W−8510 Fürth/Bay.(DE)**
Erfinder: **Lagerpusch, Klaus, Dipl.−Ing (FH)
GRUNDIG E.M.V.
Stiftung & Co KG Kurgartenstrassee 37
W−8510 Fürth/Bay.(DE)**

## Beschreibung

Die Erfindung betrifft ein Kammfilter zur Beseitigung des Übersprechens des Chrominanzsignals von Spur zu Spur bei der Wiedergabe eines nach dem Color – Under – Verfahren aufgezeichneten Farbvideosignals mit den im Oberbegriff des Anspruchs 1 angegebenen Merkmalen.

Bei allen sich derzeit auf dem Markt befindlichen Heimvideorecordern erfolgt die Aufzeichnung eines Farbvideosignals nach dem Color – Under – Verfahren. Bei diesem Verfahren werden zunächst die Luminanz – und die Chrominanzkomponente aus dem zusammengesetzten Farbvideoeingangssignal abgetrennt. Die Luminanzkomponente wird im wesentlichen frequenzmoduliert, hochpaßgefiltert und dem ersten Eingang einer Additionsstufe zugeführt. Die Chrominanzkomponente wird mittels eines Frequenzumsetzers in einen niedrigen, unterhalb der frequenzmodulierten Luminanzkomponente liegenden Frequenzbereich umgesetzt, tiefpaßgefiltert, dem zweiten Eingang der Additionsstufe zugeführt und dort mit der frequenzmodulierten Luminanzkomponente vereinigt. Das derart erhaltene Signal wird mittels rotierender Videoköpfe in nebeneinanderliegenden Schrägspuren eines Magnetbandes aufgezeichnet.

Bei der Wiedergabe des Signals erfolgt mittels eines Hochpaß – bzw. Tiefpaßfilters eine Aufspaltung in die frequenzmodulierte Luminanz – und die frequenzumgesetzte Chrominanzkomponente. Die Luminanzkomponente wird frequenzdemoduliert, tiefpaßgefiltert und dem ersten Eingang einer Additionsstufe zugeführt. Die Chrominanzkomponente wird frequenzrückumgesetzt, bandpaßgefiltert, dem zweiten Eingang der Additionsstufe zugeführt und mit der frequenzdemodulierten Luminanzkomponente vereinigt.

Bei dem bisher beschriebenen System treten bei der Farbwiedergabe Störungen auf, da die Wiedergabeköpfe nicht nur die geschriebene Spur lesen, sondern auch zusätzlich Chrominanzübersprechkomponenten von benachbarten Spuren aufnehmen. Deshalb werden bei bekannten Systemen im Weg der wiedergegebenen Chrominanzkomponente Kammfilter verwendet, welche die in den ursprünglichen Frequenzbereich rückumgesetzte Chrominanzkomponente von Übersprechkomponenten befreien.

Derartige Kammfilter, wie sie beispielsweise aus der Zeitschrift "GRUNDIG TECHNISCHE INFORMATIONEN", 3 – 84, S. 144 – 150, der DE – C – 35 12 546, der DE – C – 32 18 538 und der EP – A – 0 183 438 bekannt sind, weisen einen ersten Signalweg zur Verzögerung der wiedergegebenen frequenzrückumgesetzten Chrominanzkomponente um eine bestimmte Zeitdauer (um die Dauer einer Zeilenperiode bei NTSC, um die Dauer zweier Zeilenperioden bei PAL), einen zweiten Signalweg, an dessen Ausgang die wiedergegebene, frequenzrückumgesetzte und unverzögerte Chrominazkomponente anliegt, und eine Addierstufe zur Addition von verzögerter und nicht verzögerter Chrominanzkomponente auf.

Durch die genannte Addition entsteht ein von Übersprechkomponenten befreites Chrominanzsignal. Hierbei wird von der Eigenschaft Gebrauch gemacht, daß sich die Farbinformation in aufeinanderfolgenden Zeilen nur wenig ändert. Die Farbinformation aus benachbarten Zeilen kann also addiert werden, ohne daß sich die Bildqualität sichtbar verschlechtert. Außer dem Nutzsignal würden sich aber auch die Übersprechkomponenten addieren. Dies wird dadurch verhindert, daß vor der Aufzeichnung durch geeignete Phasenumschaltungen in der Chrominanzkomponente dafür gesorgt wird, daß bei der genannten Addition die Übersprechkomponenten gegenphasig sind und sich demzufolge auslöschen. Wie die genannten aufzeichnungsseitigen Phasenumschaltungen bei einem nach dem VHS – Standard aufgezeichneten PAL – Signal vorgenommen werden, ist beispielsweise in der bereits oben angeführten Zeitschrift "GRUNDIG TECHNISCHE INFORMATIONEN" im einzelnen beschrieben. Selbstverständlich müssen die aufzeichnungsseitigen Phasenumschaltungen bei der Wiedergabe wieder rückgängig gemacht werden.

Aus der EP – A – 0 140 716 ist es bereits bekannt, ein von einem Magnetband wiedergegebenes, in einen niedrigen Frequenzbereich umgesetztes Chrominanzsignal in Basisbandsignale (Farbdifferenzsignale) umzuwandeln und diese Basisbandsignale einer Kammfilterung zu unterwerfen.

Weiterhin ist aus der DE – A – 32 31 150 ein PAL – Kammfilter bekannt, in dessen erstem Signalweg die frequenzrückumgesetzte Chrominanzkomponente nur um die Dauer einer Zeilenperiode verzögert wird. Zusätzlich ist in diesem ersten Signalweg ein ggf. steuerbarer PAL – Phaseninverter vorgesehen, mit dessen Hilfe sichergestellt wird, daß – obwohl die durch die PAL – Norm vorgegebene Periodizität des Signals der Dauer zweier Zeilenperioden entspricht – bei der Addition von unverzögerter und um eine Zeilenperiode verzögerter Chrominanzkomponente dennoch die gewünschte Kammfilterung erreicht wird.

Aus der bereits oben genannten DE – C – 35 12 546 ist es ferner bereits bekannt, im ersten Signalweg am Ausgang des Verzögerungsgliedes ein Phasendrehglied anzuschließen. Die Laufzeit dieses Phasendrehgliedes ist einstellbar, um damit Abweichungen der Verzögerungszeit der Verzögerungsleitung von deren Nennverzögerungszeit ausgleichen zu können.

Bei den meisten sich derzeit auf dem Markt befindlichen Heimvideorecordern wird die zur Kammfilterung notwendige Verzögerung der Chrominanzkomponente mittels einer Glasverzögerungsleitung durchgeführt. Nachteilig sind jedoch die zwangsläufig damit verbundenen Stör‑Reflektionen, die Baugröße und die Temperaturabhängigkeit des Glases.

Seit einiger Zeit stellt die Halbleiterindustrie auch CCD‑Verzögerungsleitungen zur Verfügung. Die Vorteile von CCD‑Verzögerungsleitungen gegenüber Glasverzögerungsleitungen sind im wesentlichen die geringe Baugröße, die exakte Verzögerungszeit, der unkritische Abgleich und das Fehlen von Stör‑Reflektionen. Die mittels CCD‑Verzögerungsleitungen erzielbare Verzögerungszeit ist abhängig von der Anzahl der "Eimer" und der verwendeten Taktfrequenz.

Es hat sich jedoch gezeigt, daß die Verwendung von CCD‑Verzögerungsleitungen in Kammfiltern zur Kammfilterung von Chrominanzsignalen in deren ursprünglicher Frequenzlage in der Praxis mit Schwierigkeiten sowohl fertigungstechnischer als auch schaltungstechnischer Art verbunden ist. So stehen bisher keine zufriedenstellend arbeitenden, in einem einzigen Gehäuse angeordneten CCD‑Verzögerungsleitungen zur Verfügung, deren Verzögerungszeit der Dauer zweier Zeilenperioden des PAL‑Signals entspricht. Ferner liegt die zur Kammfilterung von Chrominanzsignalen in deren ursprünglicher Frequenzlage (3.58 MHz bei NTSC, 4.43 MHz bei PAL) notwendige Taktfrequenz in einem nur schwer beherrschbaren höheren Frequenzbereich. So sind u.a. umständliche Abschirmmaßnahmen erforderlich. Ferner ist aber auch die zwangsläufig mit der höheren Taktfrequenz und der großen Anzahl der "Eimer" verbundene höhere Verlustleistung nachteilig. Weiterhin ist eine eigene PLL‑Schaltung zur Erzeugung des Taktes notwendig, da dieser phasenstarr zur Farbträgerfrequenz sein muß.

Der Erfindung liegt deshalb die Aufgabe zugrunde, ein Kammfilter der im Oberbegriff des Anspruchs 1 angegebenen Art derart auszugestalten, daß die vorgenannten Schwierigkeiten bzw. Nachteile nicht mehr auftreten.

Diese Aufgabe wird durch die im kennzeichnenden Teil des Anspruchs 1 angegebenen Merkmale gelöst. Vorteilhafte Weiterbildungen ergeben sich aus den Unteransprüchen.

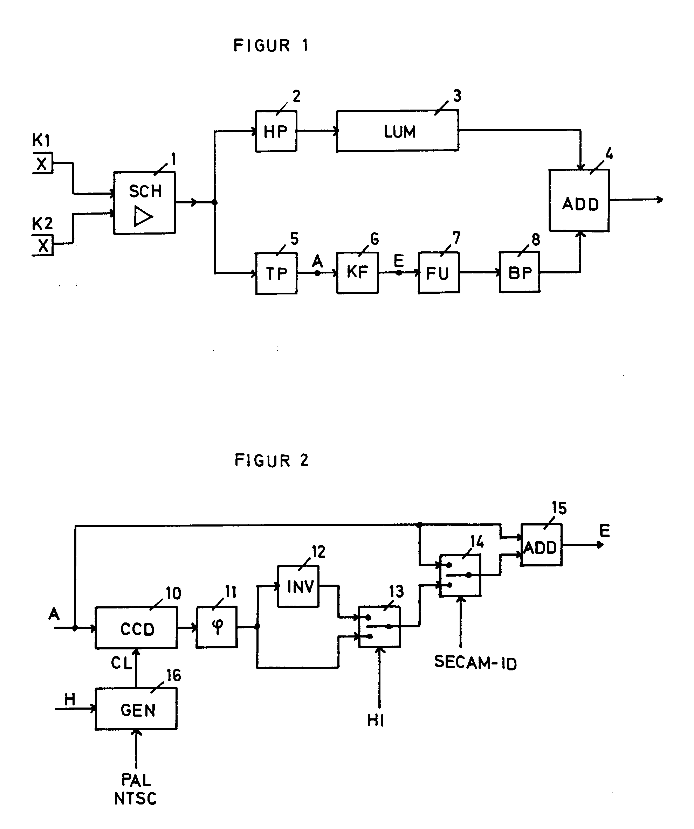

Die Vorteile der Erfindung sind insbesondere darin zu sehen, daß beim beanspruchten Kammfilter eine vergleichsweise niedrige Taktfrequenz verwendet werden kann. Weiterhin kann die Verzögerungsleitung des beanspruchten Kammfilters durch Veränderung der Taktfrequenz zur Erzielung verschiedener Verzögerungszeiten verwendet werden, so daß beispielsweise sowohl PAL‑ als auch NTSC‑Signale unter Verwendung derselben CCD‑Verzögerungsleitung kammgefiltert werden können, was insbesondere in Mehrnormenvideorecordern von Vorteil ist. Weitere vorteilhafte Eigenschaften ergeben sich aus der beispielhaften Beschreibung der Erfindung anhand der Figuren 1 bis 3.

Es zeigen:

die Figur 1    ein Blockschaltbild eines Wiedergabesystems, welches das beanspruchte Kammfilter enthält,

die Figur 2    ein Blockschaltbild des Kammfilters 6 von Fig. 1, und

die Figur 3    ein Blockschaltbild des Taktgenerators 16 von Fig.2.

Die Figur 1 zeigt ein Blockschaltbild eines Systems zur Wiedergabe von nach dem Color‑Under‑Verfahren auf einem VHS‑Videorecorder aufgezeichneten PAL‑Farbvideosignalen. Die aufgezeichneten Signale werden von den rotierenden Videoköpfen K1 und K2 gelesen und in einer Kopfumschaltungs‑ und Verstärkerschaltung 1 zu einem kontinuierlichen Signal zusammengefaßt.

Dieses gelangt einerseits an ein Hochpaßfilter 2, in dem die frequenzmodulierte Luminanzkomponente aus dem wiedergegebenen Signal abgetrennt wird. Die frequenzmodulierte Luminanzkomponente wird einer Luminanzwiedergabeschaltung 3 zugeführt und dort begrenzt, frequenzdemoduliert, tiefpaßgefiltert und einer Deemphase unterworfen. Das Ausgangssignal der Luminanzwiedergabeschaltung 3 gelangt an einen Addierer 4.

Andererseits wird das wiedergegebene kontinuierliche Signal einem Tiefpaßfilter 5 zugeführt, in dem die vor der Aufzeichnung in den niedrigen Frequenzbereich (627 kHz bei VHS) umgesetzte Chrominanzkomponente aus dem wiedergegebenen Signal abgetrennt wird. Die in den niedrigen Frequenzbereich umgesetzte Chrominanzkomponente wird in einem Kammfilter 6, welches unten im Zusammenhang mit Fig. 2 näher beschrieben wird, von Chrominanzübersprechkomponenten befreit. Die kammgefilterte Chrominanzkomponente wird anschließend in einem Frequenzumsetzer 7 in ihren ursprünglichen Frequenzbereich (4.43 MHz) rückumgesetzt, wobei gleichzeitig die aufzeichnungsseitige 90˚ Phasenumschaltung in jeder zweiten Spur rückgängig gemacht wird. Das so erhaltene Signal wird in einem Bandpaßfilter 8 bandpaßgefiltert und im Addierer 4 mit der frequenzdemodulierten Luminanzkomponente zur Bildung des wiedergegebenen zusammengesetzten Farbvideosignals vereinigt.

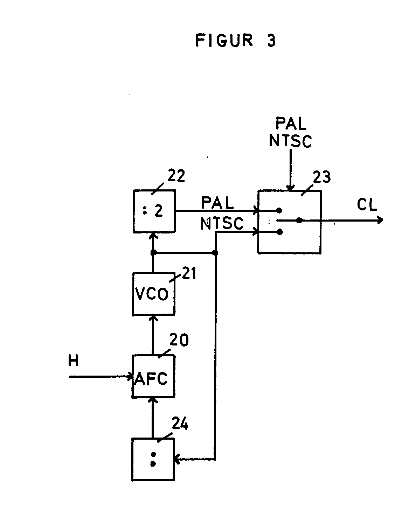

In Figur 2 ist das Kammfilter 6 von Figur 1 näher beschrieben. Am Anschluß A liegt die in den niedrigen Frequenzbereich umgesetzte wiedergegebene Chrominanzkomponente an. Diese wird einem getakteten CCD−Verzögerungsglied 10 zugeführt. Der Takt des Verzögerungsgliedes 10 wird in einem Taktgenerator 16 erzeugt, der unten im Zusammenhang mit der Figur 3 näher erläutert wird. Das Ausgangssignal des CCD−Verzögerungsgliedes 10 gelangt an einen Phasenentzerrer 11. Der Phasenentzerrer 11 ist derart dimensioniert, daß sowohl die der Chrominanzkomponente im ersten Signalweg auferlegte Gesamtverzögerung (durch das CCD−Verzögerungsglied 10 und den Phasenentzerrer 11) der durch die Signalnorm (PAL, NTSC) vorgegebenen Periodizität des am Anschluß A anliegenden Signals entspricht als auch die durch den Aufzeichnungsstandard (z.B. VHS) und die Signalnorm des Signals bedingte Phasenverschiebung in der frequenzumgesetzten Chrominanzkomponente beseitigt wird.

Im Falle eines PAL−Signals beträgt die Gesamtverzögerung zwei Zeilendauern des PAL−Signals, also

$$t_{PAL} = t_1 + t_2 = 128 \, \mu s$$

wobei

$t_1$ =     Verzögerungszeit durch das CCD−Verzögerungsglied 10 und

$t_2$ =     Verzögerungszeit durch den Phasenentzerrer 11.

Gleichzeitig muß der Phasenentzerrer 11 aber auch noch die durch den Aufzeichnungsstandard in Verbindung mit der Signalnorm bedingte Phasenverschiebung beseitigen. Im Falle eines PAL−Signals hat der Farbhilfsträger (Color−Under−Farbträger) eine Frequenz, die dem 40,125−fachen der Zeilenfrequenz entspricht. Folglich entstünde im um zwei Zeilendauern verzögerten Signal eine 90˚−Phasenverschiebung, so daß bei einer Addition mit dem unverzögerten Signal weder die gewünschte Signalverdoppelung noch die gewünschte Auslöschung der Übersprechkomponenten erreicht würde. Diese 90˚−Phasenverschiebung wird jedoch vom beanspruchten Phasenentzerrer 11 kompensiert. In der Praxis kann als Phasenentzerrer beisielsweise ein Allpaß verwendet werden. Aber ebenso können auch andere Phasenentzerrer mit linearem Frequenzgang eingesetzt werden.

Im Falle eines NTSC−Signals beträgt die Gesamtverzögerung eine Zeilendauer des NTSC−Signals, also

$$t_{NTSC} = t_3 + t_4 = 63,55 \, \mu s,$$

wobei

$t_3$ =     Verzögerungszeit durch das CCD−Verzögerungsglied 10 und

$t_4$ =     Verzögerungszeit durch den Phasenentzerrer 11.

Gleichzeitig muß der Phasenentzerrer 11 aber auch noch die durch den Aufzeichnungsstandard in Verbindung mit der Signalnorm bedingte Phasenverschiebung beseitigen. Im Falle eines NTSC−Signals hat der Farbhilfsträger (Color−Under−Farbträger) eine Frequenz, die dem 40−fachen der Zeilenfrequenz entspricht, so daß − im Gegensatz zu PAL − keine durch die Wahl der Farbhilfsträgerfrequenz bedingte, unerwünschte Phasenverschiebungen auftreten. Dennoch entstünde im um eine Zeilendauer verzögerten Signal eine 90˚−Phasenverschiebung, da gemäß dem VHS−NTSC−Standard in jeder Spur phasenumgeschaltete Signale aufgezeichnet werden. Folglich würde auch hier eine Addition von unverzögertem und verzögertem Signal weder die gewünschte Nutzsignalverdoppelung noch ein Auslöschen der Übersprechkomponenten bewirken. Doch auch diese unerwünschte 90˚−Phasenverschiebung wird vom beanspruchten Phasenentzerrer 11 kompensiert.

Das Ausgangssignal des Phasenentzerrers 11 wird sowohl auf einem direkten Weg als auch über einen Phaseninverter 2 einem Schalter 13 zugeführt, der entweder für das direkte Signal oder das über den Phaseninverter 12 geleitete Signal durchlässig gesteuert wird. Die Steuerung des Schalters 13 erfolgt in Abhängigkeit von den Kopfwechselimpulsen HI, die ansonsten in bekannter Weise zur Videomagnetkopf−Umschaltung dienen. Die Aufgabe des Schalters 13 in Verbindung mit dem Phaseninverter 12 besteht darin, in jeder zweiten Spur die Phase der verzögerten Chrominanzkomponente zu invertieren, um in Verbindung mit dem Phasenentzerrer 11 Gleichphasigkeit mit den unverzögerten Signalen zu erreichen.

Vom Ausgang des Schalters 13 gelangt das Signal − gegebenenfalls über einen weiteren Schalter 14, welcher nur bei einem Mehrnormenvideorecorder notwendig ist und welcher bei PAL oder NTSC stets für das Ausgangssignal des Schalters 13 durchlässig ist − zu einer Addierstufe 15. Dieser wird weiterhin das am Eingang A des Kammfilters anliegende Signal direkt zugeführt, so daß in der Addierstufe 15 direktes und verzögertes Signal addiert werden. Bei dieser Addition löschen sich die Übersprechkomponenten gegenseitig aus und die Nutzsignalamplituden addieren sich. Folglich erhält man am Ausgang E des Addierers 15 das von Übersprechkomponenten befreite Chrominanzsignal, welches dann in grundsätzlich bekannter Weise weiterverarbeitet wird (siehe auch Fig. 1).

Wird das beschriebene Kammfilter in einem Mehrnormenvideorecorder eingesetzt, so wird der Schalter 14 bei Vorliegen eines SECAM−Signals, welches von einer (nicht gezeichneten) SECAM−

Identifikationsschaltung erkannt wird, in seine obere Schaltstellung gebracht. Folglich wird immer dann, wenn am Eingang A des Kammfilters ein SECAM – Signal anliegt, das Kammfilter wirkungslos geschaltet.

Die Figur 3 zeigt ein Blockschaltbild eines als PLL – Schaltung ausgebildeten Taktgenerators 16 (siehe Fig.2), wie er vorzugsweise in einem Mehrnormenvideorecorder verwendet wird. Einer AFC – Schaltung 20 dieses Taktgenerators 16 werden die aus dem wiedergegebenen Signal abgetrennten zeitfehlerbehafteten Zeilenimpulse zugeführt. In der AFC – Schaltung 20 wird ein Steuersignal zur Nachsteuerung eines spannungsgesteuerten Oszillators 21 erzeugt. Am Ausgang des spannungsgesteuerten Oszillators 21 liegt ein Taktsignal an, welches einem ersten Eingang eines Schalters 23 und ferner über einen Teiler 24 der AFC – Schaltung als Ist – Signal zugeführt wird. Weiterhin wird das Ausgangssignal des spannungsgesteuerten Oszillators 21 über einen Teiler 22 (z.B. Teilungsfaktor 2) an einen zweiten Eingang des Schalters 23 angelegt. Der Schalter 23 wird von einem Kennsignal gesteuert, welches beispielsweise von der (nicht gezeichneten) Servoschaltung oder einer (nicht gezeichneten) Farbidentifikationsschaltung des Videorecorders abgeleitet wird und Auskunft darüber gibt, ob ein PAL – oder ein NTSC – Signal vorliegt. Bei Vorliegen eines PAL – Signals ist der Schalter 23 für das Ausgangssignal des Teilers 22 durchlässig. Im Falle eines NTSC – Signals wird das direkte Ausgangssignal des spannungsgesteuerten Oszillators 21 weitergegeben. Das Ausgangssignal des Schalters 23 bildet das Taktsignal zur Taktung des CCD – Verzögerungsgliedes 10 von Figur 2. Folglich kann das CCD – Verzögerungsglied 10 durch einfaches Umschalten der Taktfrequenz sowohl zur Kammfilterung von PAL – als auch zur Kammfilterung von NTSC – Signalen verwendet werden.

Der Taktgenerator 16 kann alternativ zu der in Figur 3 gezeigten Form auch unter Verwendung von Quarzen realisiert werden. Voraussetzung hierfür ist lediglich, daß der Zeitfehler des wiedergegebenen Signals klein genug ist.

**Patentansprüche**

1. Kammfilter zur Beseitigung des Übersprechens des Chrominanzsignals von Spur zu Spur bei der Wiedergabe eines nach dem Color – Under – Verfahren aufgezeichneten Farbvideosignals, wobei dem Kammfilter das in den niedrigen Frequenzbereich umgesetzte Chrominanzsignal zugeführt wird, mit
   – einem ersten Signalweg mit einem getakteten CCD – Verzögerungsglied, welches das wiedergegebene Chrominanz –

signal um eine bestimmte Zeitdauer verzögert,
   – einem zweiten Signalweg, an dessen Ausgang das wiedergegebene unverzögerte Chrominanzsignal anliegt, und
   – einer Addierstufe zur Addition von verzögertem und unverzögertem Signal,
**dadurch gekennzeichnet, daß**
   – der erste Signalweg zusätzlich einen Phasenentzerrer (11) mit linearem Frequenzgang aufweist, dessen Dimensionierung derart erfolgt, daß die dem Chrominanzsignal im ersten Signalweg auferlegte Gesamtverzögerung der durch die Signalnorm (PAL, NTSC) vorgegebenen Periodizität des Signals entspricht und daß die durch den Aufzeichnungsstandard (VHS) in Verbindung mit der Signalnorm des aufgezeichneten Farbvideosignals bedingte Phasenverschiebung beseitigt wird.

2. Kammfilter nach Anspruch 1 zur Kammfilterung eines nach dem VHS – Standard aufgezeichneten PAL – Farbvideosignals, wobei gemäß dem VHS – PAL – Standard die in jeder 2. Spur aufzuzeichnenden Signale ohne vorherigen Phasenumschaltung aufgezeichnet werden und wobei bei den in den dazwischenliegenden Spuren aufzuzeichnenden Signalen die Phase von Zeile zu Zeile um 90˚ zurückgeschaltet wird,
dadurch gekennzeichnet, daß
   – die Summe der Verzögerungszeiten des Verzögerungsgliedes (10) und des Phasenentzerrers (11) der Zeitdauer zweier Zeilenperioden des PAL – Systems entspricht,
   – der Phasenentzerrer (11) zusätzlich die durch die VHS – PAL – Farbträgerfrequenz von 40,125 • $f_H$ hervorgerufene Phasenverschiebung im um zwei Zeilenperioden verzögerten Signal beseitigt, und
   – der erste Signalweg weiterhin einen Phaseninverter (12,13) enthält, der die Phase des verzögerten Chrominanzsignals derart invertiet, daß für sämtliche wiedergegebenen Spuren verzögertes und unverzögertes Signal phasengleich sind.

3. Kammfilter nach Anspruch 1 zur Kammfilterung eines nach dem VHS – Standard aufgezeichneten NTSC – Farbvideosignals, wobei gemäß dem VHS – NTSC – Standard bei den in jeder zweiten Spur aufzuzeichnenden Signalen die Phase von Zeile zu Zeile um 90˚ zurück –

geschaltet und bei den in den dazwischenlie – genden Spuren aufzuzeichnenden Signalen die Phase von Zeile zu Zeile um 90˚ vorgeschal – tet wird,

dadurch gekennzeichnet, daß

– die Summe der Verzögerungszeiten (10) und des Phasenentzerrers (11) der Zeit – dauer einer Zeilenperiode des NTSC – Signals entspricht,

– der Phasenentzerrer (11) zusätzlich die durch die aufzeichnungsseitigen Pha – senumschaltungen hervorgerufene Pha – senverschiebung im um eine Zeilenpe – riode verzögerten Signal beseitigt, und

– der erste Signalweg weiterhin einen Phaseninverter (12,13) enthält, der die Phase des verzögerten Chrominanzsi – gnals derart invertiert, daß für sämtliche wiedergegebene Spuren verzögertes und unverzögertes Signal phasengleich sind.

4. Kammfilter nach Anspruch 2 oder 3, dadurch gekennzeichnet, daß der Phaseninverter (12,13) von den zur Videomagnetkopf – Um – schaltung vorgesehenen Kopfwechselimpulsen (HI) gesteuert wird.

5. Kammfilter nach einem oder mehreren der Ansprüche 1 bis 4,
dadurch gekennzeichnet, daß

– es in einem Mehrnormen – Videorecorder verwendet wird, und

– der Takt für das CCD – Verzögerungs – glied (10) in einer PLL – Schleife erzeugt wird, welcher die Zeilenimpulse des wiedergegebenen Chrominanzsignals und ein die Signalnorm kennzeichnendes Signal zugeführt werden und welche automatisch den der Norm des Signals zugehörigen Takt erzeugt.

6. Kammfilter nach Anspruch 5,
dadurch gekennzeichnet, daß die PLL – Schleife einen Frequenzteiler (22) und einen Schalter (23) enthält.

7. Kammfilter nach Anspruch 5 oder 6, dadurch gekennzeichnet, daß Schaltmittel (14) vorgesehen sind, die von einer SECAM – Identifikationsschaltung gesteuert werden und bei Vorliegen eines SECAM – Signals das Kammfilter wirkungslos schalten.

**Claims**

1. Comb filter for eliminating the track – to – track crosstalk of the chrominance signal during the replaying of a colour video signal recorded in accordance with the colour – under method, the comb filter being supplied with the chromin – ance signal converted into the lower frequency band, comprising

– a first signal path with a clocked CCD delay section which delays the replayed chrominance signal by a certain period of time,

– a second signal path, at the output of which the replayed undelayed chromin – ance signal is present, and

– an adding stage for adding the delayed and undelayed signal,

characterized in that

– the first signal path additionally exhibits a phase equalizer (11) with linear fre – quency response, which is dimensioned in such a manner that the total delay imposed on the chrominance signal in the first signal path corresponds to the periodicity of the signal predetermined by the signal standard (PAL, NTSC), and in that the phase shift due to the re – cording standard (VHS) in conjunction with the signal standard of the recorded colour video signal is eliminated.

2. Comb filter according to Claim 1 for comb – filtering a PAL colour video signal recorded in accordance with the VHS standard, the signals to be recorded in each second track in accor – dance with the VHS – PAL standard being re – corded without previous phase switching and the phase in the signals to be recorded in the intermediate tracks being switched back by 90˚ from line to line, characterized in that

– the sum of the delay times of the delay section (10) and of the phase equalizer (11) corresponds to the period of two line periods of the PAL system,

– the phase equalizer (11) additionally eliminates the phase shift, caused by the VHS – PAL colour subcarrier frequency of $40.125 \cdot f_H$, in the signal delayed by two line periods, and

– the first signal path also contains a phase inverter (12, 13) which inverts the phase of the delayed chrominance signal in such a manner that the delayed and un – delayed signal has the same phase for all replayed tracks.

3. Comb filter according to Claim 1 for comb – filtering an NTSC colour video signal recorded in accordance with the VHS standard, the phase being switched back by 90˚ from line to line in the signals to be recorded in each second track in accordance with the VHS –

NTSC standard and the phase being advanced by 90˚ from line to line in the signals to be recorded in the intermediate tracks, characterized in that

- the sum of the delay times (10) and of the phase equalizer (11) corresponds to the period of one line period of the NTSC signal,
- the phase equalizer (11) additionally eliminates the phase shift, caused by the phase switching operations at the recording end, in the signal delayed by one line period, and
- the first signal path also contains a phase inverter (12, 13) which inverts the phase of the delayed chrominance signal in such a manner that the delayed and undelayed signal has the same phase for all replayed tracks.

4. Comb filter according to Claim 2 or 3, characterized in that the phase inverter (12, 13) is controlled by the head change pulses (HI) provided for video magnetic head switching.

5. Comb filter according to one or more of Claims 1 to 4, characterized in that
- it is used in a multi − standard video recorder, and
- the clock for the CCD delay section (10) is generated in a PLL loop which is supplied with the line pulses of the replayed chrominance signal and a signal identifying the signal standard and which automatically generates the clock belonging to the standard of the signal.

6. Comb filter according to Claim 5, characterized in that the PLL loop contains a frequency divider (22) and a switch (23).

7. Comb filter according to Claim 5 or 6, characterized in that switching means (14) are provided which are controlled by a SECAM identification circuit and which deactivate the comb filter when a SECAM signal is present.

**Revendications**

1. Filtre en peigne servant à éliminer la diaphonie du signal de chrominance de piste à piste lors de la reproduction d'un signal vidéo couleurs enregistré selon le procédé Color − Under, et auquel est envoyé le signal de chrominance amené par conversion dans la gamme des basses fréquences, comportant
- une première voie de transmission de signaux possédant un circuit de retar −

dement CCD commandé de façon cadencée et qui retarde d'une durée déterminée le signal de chrominance reproduit,
- une seconde voie de transmission de signaux, à la sortie de laquelle est présent le signal de chrominance reproduit non retardé, et
- un étage additionneur servant à additionner un signal retardé et un signal non retardé,

caractérisé en ce que
- la première voie de transmission de signaux comporte en outre un compensateur de phase (11) possédant une réponse en fréquence linéaire et dont le dimensionnement est choisi tel que le retard total, appliqué au signal de chrominance dans la première voie de transmission de signaux, correspond à la périodicité du signal, prédéterminée par la norme de signal (PAL, NTSC), et que le déphasage, qui est dû à la norme d'enregistrement (VHS) en liaison avec la norme du signal vidéo couleurs enregistré, est éliminé.

2. Filtre en peigne selon la revendication 1 pour réaliser le filtrage en peigne d'un signal vidéo couleurs PAL enregistré selon la norme VHS, et dans lequel conformément à la norme VHS − PAL, les signaux devant être enregistrés dans chaque 2 − ème piste sont enregistrés sans commutation de phase préalable et, pour les signaux devant être enregistrés dans les pistes intercalaires, la phase est retardée de 90˚ d'une ligne à l'autre, caractérisé en ce que
- la somme des retards produits par le circuit de retardement (10) et le compensateur de phase (11) correspond à la durée de deux périodes de ligne du système PAL,
- le compensateur de phase (11) élimine en outre le déphasage, qui est provoqué par la fréquence de la porteuse couleur du système VHS − PAL égale à $40{,}125.f_H$, dans le signal retardé de deux périodes de ligne, et
- la première voie de transmission de signaux contient en outre un inverseur de phase (12,13), qui inverse la phase du signal de chrominance retardé de telle sorte que pour toutes les pistes reproduites, le signal retardé et le signal non retardé possèdent la même phase.

**3.** Filtre en peigne selon la revendication 1 servant à réaliser le filtrage en peigne d'un signal vidéo couleurs NTSC enregistré selon la norme VHS, et dans lequel, conformément à la norme VHS – NTSC, pour les signaux devant être enregistrés dans chaque seconde piste, la phase est retardée de 90° d'une ligne à la suivante et, pour les signaux devant être enregistrés dans les pistes intercalaires, la phase est avancée de 90° d'une ligne à la suivante, caractérisé en ce que

- la somme des retards produits par le circuit de retardement (10) et le compensateur de phase (11) correspond à la durée d'une période de ligne du signal NTSC,
- le compensateur de phase (11) élimine en outre le déphasage produit par les commutations de phase intervenant lors de l'enregistrement, dans le signal retardé d'une période de ligne, et
- la première voie de transmission de signaux contient en outre un inverseur de phase (12,13), qui inverse la phase du signal de chrominance retardé de telle sorte que pour toutes les pistes reproduites, le signal retardé et le signal non retardé possèdent la même phase.

**4.** Filtre en peigne selon la revendication 2 ou 3, caractérisé en ce que l'inverseur de phase (12,13) est commandé par les impulsions (HI) de commutation des têtes, qui sont prévues pour la commutation des têtes magnétiques vidéo.

**5.** filtre en peigne selon une ou plusieurs des revendications 1 à 4, caractérisé en ce que

- on l'utilise dans un magnétoscope à normes multiples, et
- la cadence pour le circuit de retardement CCD (10) est produite dans une boucle PLL, à laquelle sont envoyées les impulsions de ligne du signal de chrominance reproduit et un signal caractérisant la norme du signal, et qui produit automatiquement la cadence associée à la norme du signal.

**6.** Filtre en peigne selon la revendication 5, caractérisé en ce que la boucle PLL contient un diviseur de fréquence (22) et un commutateur (23).

**7.** Filtre en peigne selon la revendication 5 ou 6, caractérisé en ce qu'il est prévu des moyens de commutation (14), qui sont commandés par un circuit d'identification SECAM et qui, dans le cas de la présence d'un signal SECAM, activent le filtre en peigne.

FIGUR 1

FIGUR 2

FIGUR 3